# EUROPEAN PATENT APPLICATION

(11) **EP 4 844 216 A2**
(43) Date of publication of application: **25.11.2026**
(21) Application number: 26180764.8
(22) Date of filing: 22.05.2026
(51) Int. Cl.: F02C 7/26, F01D 15/10, F01D 25/34, F02C 7/27, F02C 7/32, F02C 7/36, F02C 7/262, F02C 7/268, F02C 7/275

(54) **ELECTRO-PNEUMATIC DRIVE FOR AIRCRAFT POWERPLANT**

(30) Priority: 23.05.2025 US 202519217778
(71) Applicant: RTX Corporation, Farmington, CT 06032 (US)
(72) Inventor: AKIN, John, Charlotte, 28205 (US); BREAULT, Andrew E., Bolton, 06043 (US); CLARK, Thomas E., Wells, 04090 (US); CHOE, Jung Muk, Glastonbury, 06033 (US)
(74) Representative: Dehns

(57) **Abstract**

An apparatus is provided for an aircraft powerplant (20). This apparatus is configured as or otherwise includes an electro-pneumatic drive (98). The electro-pneumatic drive (98) includes a housing structure (116), an air turbine (110), an electric motor (108), a clutch (114) and an output element (150). The air turbine (110) includes an air turbine rotor (146) housed in the housing structure (116). The air turbine rotor (146) is operatively coupled to the output element (150) through the clutch (114). The air turbine (110) is configured to drive rotation of the output element (150) about an axis (148). The electric motor (108) includes an electric motor rotor (120) housed in the housing structure (116). The electric motor rotor (120) is operatively coupled to the output element (150) through the clutch (114) independent of the air turbine (110). The electric motor (108) is configured to drive rotation of the output element (150) about the axis (148). The clutch (114) is housed in the housing structure (116).

## Description

### BACKGROUND OF THE INVENTION

### 1. Technical Field

This invention relates generally to an aircraft powerplant and, more particularly, to an accessory system for the aircraft powerplant.

### 2. Background Information

An aircraft powerplant may include an accessory system with a rotational drive such as an electric motor or an air turbine. Various types and configurations of accessory systems and rotational drives are known in the art. While these known accessory systems and rotational drives have various benefits, there is still room in the art for improvement.

### SUMMARY OF THE INVENTION

According to an aspect of the present invention, an apparatus is provided for an aircraft powerplant. This apparatus is configured as or otherwise includes an electro-pneumatic drive. The electro-pneumatic drive includes a housing structure, an air turbine, an electric motor, a clutch and an output element. The air turbine includes an air turbine rotor housed in the housing structure. The air turbine rotor is operatively coupled to the output element through the clutch. The air turbine is configured to drive rotation of the output element about an axis. The electric motor includes an electric motor rotor housed in the housing structure. The electric motor rotor is operatively coupled to the output element through the clutch independent of the air turbine. The electric motor is configured to drive rotation of the output element about the axis. The clutch is housed in the housing structure.

According to another aspect of the present invention, another apparatus is provided for an aircraft powerplant. This apparatus includes a turbine engine and an accessory system for the turbine engine. The turbine engine includes a compressor section, a combustor section, a turbine section, a flowpath and an engine rotating structure. The flowpath extends through the compressor section, the combustor section and the turbine section. The engine rotating structure includes a compressor rotor in the compressor section and a turbine rotor in the turbine section. The accessory system includes an air turbine, an electric motor, a clutch and an output element. The air turbine includes an air turbine rotor operatively coupled to the output element through the clutch. The air turbine is configured to drive rotation of the output element. The electric motor includes an electric motor rotor operatively coupled to the output element through the clutch and independent of the air turbine. The electric motor is configured to drive rotation of the output element. The output element is operatively coupled to the engine rotating structure.

According to still another aspect of the present invention, another apparatus is provided for an aircraft powerplant. This apparatus is configured as or otherwise includes an electro-pneumatic drive. The electro-pneumatic drive includes a housing structure, an air turbine, an electric motor, an epicyclic gear system and an output element. The air turbine includes an air turbine rotor housed in the housing structure. The air turbine rotor is operatively coupled to the output element through the epicyclic gear system. The air turbine is configured to drive rotation of the output element about an axis. The electric motor includes an electric motor rotor housed in the housing structure. The electric motor rotor is operatively coupled to the output element through the epicyclic gear system independent of the air turbine. The electric motor is configured to drive rotation of the output element about the axis. The epicyclic gear system is housed in the housing structure.

The following optional features may be applied to any of the above aspects in any combination.

The accessory system may also include an electro-pneumatic drive configured as a line replaceable unit. The electro-pneumatic drive may include the air turbine, the electric motor and the clutch.

The air turbine rotor may be coaxial with the electric motor rotor.

The accessory system may also include an epicyclic gear system operatively coupled between (a) the air turbine rotor and the electric motor rotor and (b) the engine rotating structure.

The clutch may be configured as or otherwise include an overrunning clutch.

The air turbine rotor may be operatively coupled to the clutch through the electric motor.

The air turbine rotor may be operatively coupled to the output element independent of the electric motor.

The air turbine rotor may be configured to rotate about the axis. In addition or alternatively, the electric motor rotor may be configured to rotate about the axis.

The axis may be a first axis. The electric motor rotor may be configured to rotate about a second axis that is offset from the first axis.

The electro-pneumatic drive may also include a gear system operatively coupling the electric motor rotor to the clutch.

The gear system may also operatively couple the air turbine rotor to the clutch.

The electro-pneumatic drive may also include a gear system operatively coupling the air turbine rotor to the clutch.

The electro-pneumatic drive may also include a gear system. The air turbine rotor may be operatively coupled to the clutch through the gear system independent of the electric motor. The electric motor rotor may be operatively coupled to the clutch through the gear system independent of the air turbine.

The clutch may be a first clutch. The electro-pneumatic drive may also include a second clutch operatively coupling the air turbine rotor to the electric motor.

The second clutch may be configured as or otherwise include an overrunning clutch.

The apparatus may also include an accessory gearbox comprising a gear system. The housing structure may be mounted to the accessory gearbox. The output element may be operatively coupled to the gear system.

The apparatus may also include a compressor section, a combustor section, a turbine section, a flowpath and a first rotating structure. The flowpath may extend through the compressor section, the combustor section and the turbine section. The first rotating structure may include a first compressor rotor in the compressor section and a first turbine rotor in the turbine section. The first rotating structure may be operatively coupled to the output element.

The apparatus may also include a second rotating structure, an electric machine and an electrical system. The second rotating structure may include a second compressor rotor in the compressor section and a second turbine rotor in the turbine section. The electric machine may be configurable as a second electric motor and/or an electric generator. The electric machine may include an electric machine rotor that is operatively coupled to the second rotating structure. The electrical system may electrically couple the electric motor and the electric machine.

The present invention may include any one or more of the individual features disclosed above and/or below alone or in any combination thereof.

The foregoing features and the operation of the invention will become more apparent in light of the following description and the accompanying drawings.

### BRIEF DESCRIPTION OF THE DRAWINGS

FIG. 1 is a partial schematic illustration of an aircraft propulsion system.
FIG. 2 is a schematic illustration of a portion of the aircraft propulsion system with an accessory system.
FIG. 3 is a schematic illustration of a portion of the aircraft propulsion system at an electro-pneumatic drive of the accessory system.
FIGS. 4A and 4B are partial schematic illustrations of a clutch of the electro-pneumatic drive in various arrangements.
FIG. 5 is a schematic illustration of another electro-pneumatic drive arrangement.

### DETAILED DESCRIPTION

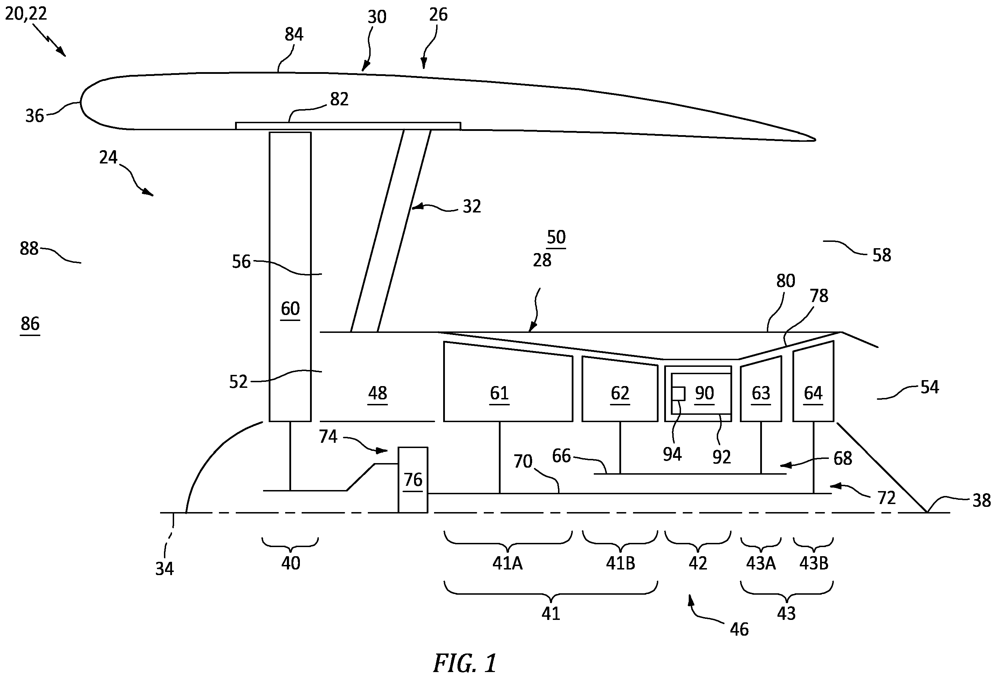

FIG. 1 illustrates a powerplant 20 for an aircraft. The aircraft may be an airplane, a drone (e.g., an unmanned aerial vehicle (UAV)) or any other manned or unmanned aerial vehicle or system. For ease of description, the aircraft powerplant 20 is described below as a propulsion system 22 for the aircraft and, more particularly, as a turbofan propulsion system. The aircraft powerplant 20 of the present invention, however, is not limited to such an exemplary propulsion system. The aircraft propulsion system 22, for example, may alternatively be configured as a turbojet propulsion system, a turboprop propulsion system, a turboshaft propulsion system, a propfan propulsion system, a pusher fan propulsion system, or any other type of ducted and/or open propulsor rotor propulsion system. Moreover, the aircraft powerplant 20 is not limited to propulsion system applications. The aircraft powerplant 20, for example, may also (or alternatively) be configured as an electrical power system for the aircraft; e.g., an auxiliary power unit (APU).

The aircraft propulsion system 22 includes a gas turbine engine 24 (e.g., a turbofan engine) housed within a stationary propulsion system housing 26, which propulsion system housing 26 of FIG. 1 includes an inner housing structure 28, an outer housing structure 30 and a guide vane structure 32 (e.g., a fan exit guide vane (FEGV) structure) extending radially between and connected to the inner housing structure 28 and the outer housing structure 30. The aircraft propulsion system 22 extends axially along an axis 34 of the aircraft propulsion system 22 between an axial upstream, forward end 36 of the aircraft propulsion system 22 and an axial downstream, aft end 38 of the aircraft propulsion system 22. Briefly, the propulsion system axis 34 may be a centerline axis of the aircraft propulsion system 22, the turbine engine 24 and/or one or more of its members. The propulsion system axis 34 may also or alternatively be a rotational axis for one or more members of the turbine engine 24.

The aircraft propulsion system 22 and its turbine engine 24 of FIG. 1 include a propulsor section 40 (e.g., a fan section), a compressor section 41, a combustor section 42 and a turbine section 43. The compressor section 41 of FIG. 1 includes a low pressure compressor (LPC) section 41A and a high pressure compressor (HPC) section 41B. The turbine section 43 of FIG. 1 includes a high pressure turbine (HPT) section 43A and a low pressure turbine (LPT) section 43B. At least (or only) the LPC section 41A, the HPC section 41B, the combustor section 42, the HPT section 43A and the LPT section 43B collectively form a core 46 (e.g., a gas generator) of the turbine engine 24. The aircraft propulsion system 22 and its turbine engine 24 of FIG. 1 also include a core flowpath 48 (e.g., an annular core flowpath) and a bypass flowpath 50 (e.g., an annular bypass flowpath). The core flowpath 48 extends sequentially through the LPC section 41A, the HPC section 41B, the combustor section 42, the HPT section 43A and the LPT section 43B from an airflow inlet 52 into the core flowpath 48 to a combustion products exhaust 54 out from the core flowpath 48. The bypass flowpath 50 extends through a bypass duct from an airflow inlet 56 into the bypass flowpath 50 to an airflow exhaust 58 from the bypass flowpath 50, where the bypass duct may be formed by the inner housing structure 28 and the outer housing structure 30. The bypass flowpath 50 and its bypass duct are configured to bypass (e.g., are disposed radially outboard of and extend along) the engine core 46 and the inner housing structure 28.

The propulsor section 40, the LPC section 41A, the HPC section 41B, the combustor section 42, the HPT section 43A and the LPT section 43B may be arranged sequentially along the propulsion system axis 34 within the propulsion system housing 26. The propulsor section 40 includes a bladed propulsor rotor 60; e.g., a fan rotor. The LPC section 41A includes a bladed low pressure compressor (LPC) rotor 61. The HPC section 41B includes a bladed high pressure compressor (HPC) rotor 62. The HPT section 43A includes a bladed high pressure turbine (HPT) rotor 63. The LPT section 43B includes a bladed low pressure turbine (LPT) rotor 64. Each of these engine rotors 60-64 includes a rotor base (e.g., a disk or a hub) and a plurality of rotor blades (e.g., airfoils, vanes, etc.). The rotor blades may be arranged into one or more stages axially along the respective engine rotor 60-64. The rotor blades in each stage are arranged and may be equispaced circumferentially around the respective rotor base in an annular array. Each of the rotor blades is connected to the respective rotor base. The rotor blades, for example, may be formed integral with or mechanically fastened, welded, brazed and/or otherwise attached to the respective rotor base. Each of the rotor blades projects spanwise (e.g., radially) out from the respective rotor base to a distal tip of the respective rotor blade.

The HPC rotor 62 is coupled to and rotatable with the HPT rotor 63. The HPC rotor 62 of FIG. 1, for example, is connected to the HPT rotor 63 through a high speed shaft 66. At least (or only) the HPC rotor 62, the HPT rotor 63 and the high speed shaft 66 collectively form a high speed rotating structure 68; e.g., a high speed spool of the turbine engine 24 and its engine core 46. This high speed rotating structure 68 of FIG. 1 and its members 62, 63 and 66 are rotatable about the propulsion system axis 34. However, it is contemplated the high speed rotating structure 68 may alternatively be rotatable about another axis radially and/or angularly offset from the rotational axis of the propulsor rotor 60 and/or the centerline axis of the turbine engine 24.

The LPC rotor 61 is coupled to and rotatable with the LPT rotor 64. The LPC rotor 61 of FIG. 1, for example, is connected to the LPT rotor 64 through a low speed shaft 70. At least (or only) the LPC rotor 61, the LPT rotor 64 and the low speed shaft 70 collectively form a low speed rotating structure 72; e.g., a low speed spool of the turbine engine 24 and its engine core 46. This low speed rotating structure 72 of FIG. 1 and its members 61, 64 and 70 are rotatable about the propulsion system axis 34. However, it is contemplated the low speed rotating structure 72 may alternatively be rotatable about another axis radially and/or angularly offset from the rotational axis of the propulsor rotor 60 and/or the centerline axis of the turbine engine 24.

The low speed rotating structure 72 is coupled to the propulsor rotor 60 through a rotating structure-to-propulsor (RSP) drivetrain 74. The RSP drivetrain 74 may be configured as a geared drivetrain, where a geartrain 76 (e.g., a transmission, a speed change device, an epicyclic geartrain, etc.) is disposed between and operatively couples the propulsor rotor 60 to the low speed rotating structure 72 and its LPT rotor 64. With this arrangement, the propulsor rotor 60 may rotate at a different (e.g., slower) rotational speed than the low speed rotating structure 72 and its LPT rotor 64. Here, the propulsor rotor 60 and the low speed rotating structure 72 may rotate in a common (the same) direction about the propulsion system axis 34 or in opposite directions about the propulsion system axis 34 depending, for example, upon the specific configuration of the geartrain 76. Alternatively, the RSP drivetrain 74 may be configured as a direct-drive drivetrain, where the geartrain 76 is omitted. With such an arrangement, the propulsor rotor 60 rotates at a common (the same) rotational speed as the low speed rotating structure 72 and its LPT rotor 64.

The inner housing structure 28 of FIG. 1 includes an inner case 78 (e.g., a core case) for the turbine engine 24, and an inner nacelle structure 80 (sometimes referred to as an inner fixed structure (IFS)). The inner case 78 is disposed radially outboard of, extends axially along and may circumscribe one or more or all of the engine sections 41A-43B and the engine rotors 61-64. The inner case 78 may thereby house and provide a support structure for the respective engine sections 41A-43B and the engine rotors 61-64. The inner nacelle structure 80 is configured to provide an aerodynamic cover over the engine core 46 and its inner case 78. The inner housing structure 28 and its inner nacelle structure 80 may also form a radial inner peripheral boundary of the bypass flowpath 50.

The outer housing structure 30 of FIG. 1 includes an outer case 82 (e.g., a fan case) for the turbine engine 24 and an outer nacelle structure 84. The outer case 82 is disposed radially outboard of, extends axially along and may circumscribe the propulsor section 40 and its propulsor rotor 60. The outer case 82 may thereby house and may be configured as a containment structure for the propulsor section 40 and its propulsor rotor 60. The outer nacelle structure 84 is configured to provide an aerodynamic cover over the outer case 82. The outer housing structure 30 and its outer nacelle structure 84 may also form a radial outer peripheral boundary of the bypass flowpath 50. Of course, where the aircraft propulsion system 22 is alternatively configured as an open propulsor rotor propulsion system (e.g., the propulsor rotor 60 is an open propulsor rotor), the outer housing structure 30 may be omitted to expose the propulsor rotor 60 to an environment 86 external to the aircraft and its aircraft propulsion system 22.

During operation of the aircraft propulsion system 22 of FIG. 1, ambient air from the external environment 86 enters the aircraft propulsion system 22 and its turbine engine 24 through an airflow inlet 88. This air is propelled by the rotating propulsor rotor 60 in a downstream, aft direction towards the propulsion system aft end 38.

An outer stream of the air propelled by the rotating propulsor rotor 60 is directed into the bypass flowpath 50 through its bypass inlet 56, which air entering the bypass flowpath 50 may be referred to as "bypass air". The guide vane structure 32 conditions (e.g., straightens out, de-swirls, etc.) the flow of the bypass air within the bypass duct. This conditioned bypass air is subsequently directed out of the aircraft propulsion system 22 through the bypass exhaust 58 to provide forward thrust. This propulsion of the bypass air may account for a majority of the forward thrust generated by the aircraft propulsion system 22 and its turbine engine 24 of FIG. 1.

An inner stream of the air propelled by the rotating propulsor rotor 60 is directed into the core flowpath 48 through its core inlet 52, which air entering the core flowpath 48 may be referred to as "core air". This core air is compressed by the LPC rotor 61 and the HPC rotor 62 and is directed into a combustion chamber 90 (e.g., annular combustion chamber) of a combustor 92 (e.g., annular combustor) in the combustor section 42. Fuel is injected into the combustion chamber 90 by one or more fuel injectors 94 and mixed with the compressed core air to provide a fuel-air mixture. This fuel-air mixture is ignited and combustion products thereof flow through and sequentially drive rotation of the HPT rotor 63 and the LPT rotor 64. The rotation of the HPT rotor 63 and the LPT rotor 64 respectively drive rotation of the HPC rotor 62 and the LPC rotor 61 and, thus, compression of the air received from the core inlet 52. The rotation of the LPT rotor 64 also drives rotation of the propulsor rotor 60 through the RSP drivetrain 74.

While the turbine engine 24 is described above with a particular two rotating structure arrangement (e.g., a two-spool architecture), the present invention is not limited thereto. For example, the LPC rotor 61 may be omitted to configure the LPT rotor 64 as a power turbine (PT) rotor for the propulsor rotor 60. The turbine engine 24 may also or alternatively include another rotating structure with a bladed compressor rotor in the compressor section 41 and a bladed turbine rotor in the turbine section 43; e.g., an intermediate speed spool for the engine core 46.

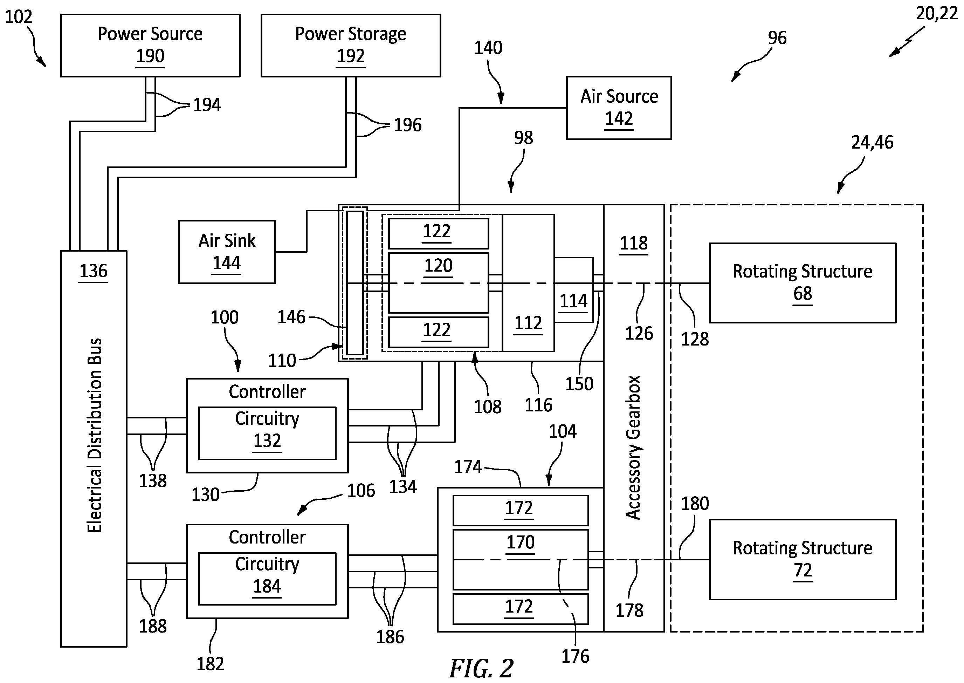

Referring to FIG. 2, the aircraft propulsion system 22 includes an accessory system 96 for the turbine engine 24. This engine accessory system 96 includes an electro-pneumatic drive 98, an electro-pneumatic drive (EPD) controller 100 and an aircraft electrical system 102. The engine accessory system 96 may also include an electric machine 104 and an electric machine (EM) controller 106.

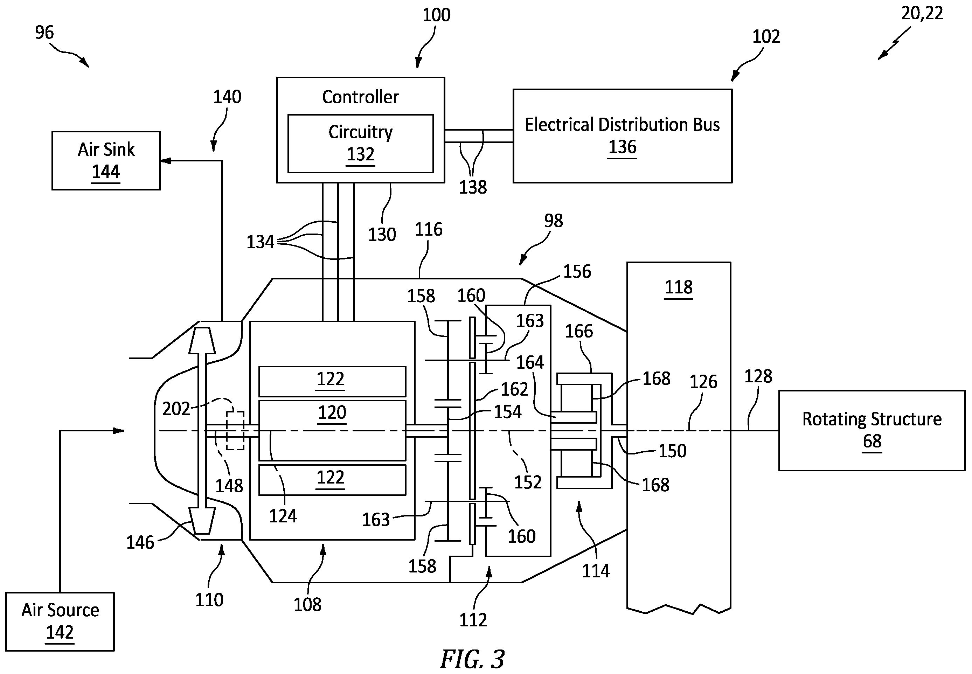

Referring to FIG. 3, the electro-pneumatic drive 98 includes an electro-pneumatic drive (EPD) electric motor 108, an electro-pneumatic drive (EPD) air turbine 110, an electro-pneumatic drive (EPD) gear system 112, an electro-pneumatic drive (EPD) clutch 114 and an electro-pneumatic drive (EPD) housing structure 116. This electro-pneumatic drive 98 may be configured as a modular device such as a line replaceable unit (LRU). The electro-pneumatic drive members 108, 110, 112 and 114 of FIG. 3, for example, are disposed within an interior of the EPD housing structure 116, and the electro-pneumatic drive 98 and its EPD housing structure 116 are removably mechanically fastened to an accessory gearbox 118 for the turbine engine 24. The present invention, however, is not limited to such an exemplary configuration. For example, it is contemplated one or more of the electro-pneumatic drive members 108, 110, 112 and/or 114 may alternatively be housed within a dedicated housing structure, and the electro-pneumatic drive members may be stacked or otherwise arranged together to form the electro-pneumatic drive 98.

The EPD electric motor 108 includes an electric motor rotor 120 and an electric motor stator 122. The motor rotor 120 is rotatable about a rotational axis 124 of the EPD electric motor 108, which motor axis 124 may also be a centerline axis of the EPD electric motor 108. The motor stator 122 is disposed next to and in electromagnetic communication with the motor rotor 120. The motor stator 122 of FIG. 3, in particular, is radially outboard of and circumscribes the motor rotor 120. With this arrangement, the EPD electric motor 108 is configured as a radial flux electric motor. The EPD electric motor 108 of the present invention, however, is not limited to such an exemplary rotor-stator configuration nor to radial flux arrangements. The motor rotor 120, for example, may alternatively be radially outboard of and circumscribe the motor stator 122. In another example, the motor rotor 120 may be axially next to the motor stator 122 configuring the EPD electric motor 108 as an axial flux electric motor. Referring again to FIG. 3, the motor rotor 120 and the motor stator 122 are disposed within the interior of the EPD housing structure 116.

The EPD electric motor 108 of FIG. 3 is operatively coupled to the high speed rotating structure 68. The motor rotor 120 of FIG. 3, for example, is mechanically coupled to a first gearbox gear system 126 of the accessory gearbox 118 through the EPD gear system 112 and the EPD clutch 114 (when engaged). This first gearbox gear system 126 is mechanically coupled to the high speed rotating structure 68 through a first gearbox-to-rotating structure (GRS) drivetrain 128; schematically shown. This first GRS drivetrain 128 may be configured as or otherwise include a shaft, a tower shaft assembly, another gearbox (e.g., an angle gearbox), and/or the like.

The EPD electric motor 108 is configured to convert electricity received from the aircraft electrical system 102 into mechanical power. For example, during operation of the EPD electric motor 108, the motor stator 122 may generate an electromagnetic field with the motor rotor 120 using a current of electricity received from the aircraft electrical system 102 through the EPD controller 100. This electromagnetic field may drive rotation of the motor rotor 120. The motor rotor 120, in turn, may provide mechanical power to and drive rotation of the high speed rotating structure 68, for example sequentially through the EPD gear system 112, the EPD clutch 114 (when engaged), the first gearbox gear system 126 and the first GRS drivetrain 128. This mechanical power may be provided to boost power or completely power the rotation of the high speed rotating structure 68.

The EPD controller 100 includes an electro-pneumatic drive (EPD) controller housing 130 and internal electro-pneumatic drive (EPD) controller circuitry 132. The EPD controller housing 130 may be configured as an enclosed case (e.g., a closed or sealed container) for the EPD controller circuitry 132. The EPD controller circuitry 132 is disposed within an interior of the EPD controller housing 130; e.g., an internal chamber or other volume(s) within and enclosed by the EPD controller housing 130. The EPD controller circuitry 132 includes various electrical components, connectors and the like. Examples of the electrical components include, but are not limited to, power electronics, power semiconductor, printed circuit board(s) (PCB(s)), electrical inductor(s), electrical inverter(s), electrical amplifier(s), electrical switch(es) (e.g., contactor(s), relay(s), etc.), a processing device, memory, a communication module, electrical transformer(s), electrical rectifier(s), and/or the like.

The EPD controller 100 is electrically coupled to the EPD electric motor 108 through one or more electrical couplings 134. The EPD controller circuitry 132 of FIG. 3, for example, is electrically coupled to the EPD electric motor 108 and its motor stator 122 through the electric couplings 134. Similarly, the EPD controller 100 is electrically coupled to an electrical distribution bus 136 of the aircraft electrical system 102 through, for example, one or more electric couplings 138. The EPD controller circuitry 132 of FIG. 3, for example, is electrically coupled to the aircraft electrical system 102 and its electrical distribution bus 136 through the electric couplings 138. Examples of the electrical couplings 134, 138 include, but are not limited to, high voltage electric cables, power feeder cables, power buses, and/or the like.

The EPD controller 100 and its EPD controller circuitry 132 are configured to control operation of the EPD electric motor 108. For example, the EPD controller 100 and its EPD controller circuitry 132 are configured to regulate a flow of electricity from the aircraft electrical system 102 to the EPD electric motor 108. This electricity flow regulation may include: (a) turning-on the flow of electricity from the aircraft electrical system 102 to the EPD electric motor 108 (e.g., electrically coupling the EPD electric motor 108 to the aircraft electrical system 102); (b) turning-off the flow of electricity from the aircraft electrical system 102 to the EPD electric motor 108 (e.g., electrically decoupling the EPD electric motor 108 from the aircraft electrical system 102); (c) moderating the flow of electricity from the aircraft electrical system 102 to the EPD electric motor 108. Here, the EPD controller 100 operates as a motor controller for the EPD electric motor 108.

The EPD air turbine 110 is arranged fluidly inline along an air circuit 140. This air circuit 140 extends longitudinally through the EPD air turbine 110 from an air source 142 to an air sink 144. The air source 142 may be disposed remote from (e.g., outside of) the aircraft propulsion system 22. The air source 142, for example, may be configured as or otherwise include a compressor section of an auxiliary power unit (APU) for the aircraft, a compressor section of a companion propulsion system to the aircraft propulsion system 22, an electric compressor arranged with an airframe of the aircraft, an environmental control system (ECS) for the aircraft, and/or the like. The air sink 144 may be configured as an internal volume of the aircraft propulsion system 22; e.g., the air sink 144 may be the bypass flowpath 50 of FIG. 1. Alternatively, the air sink 144 may be configured external to the aircraft propulsion system 22; e.g., the air sink 144 may be the external environment 86.

The EPD air turbine 110 includes a bladed air turbine rotor 146 disposed within the interior of the EPD housing structure 116. The air turbine rotor 146 is rotatable about a rotational axis 148 of the EPD air turbine 110, which turbine axis 148 may also be a centerline axis of the EPD air turbine 110. The air turbine rotor 146 includes a rotor base (e.g., a disk or a hub) and a plurality of turbine blades (e.g., airfoils, vanes, etc.). The turbine blades may be arranged into one or more stages axially along the air turbine rotor 146. The turbine blades in each stage are arranged and may be equispaced circumferentially around the rotor base in an annular array. Each of the turbine blades is connected to the rotor base. The turbine blades, for example, may be formed integral with or mechanically fastened, welded, brazed and/or otherwise attached to the respective rotor base. Each of the turbine blades projects spanwise (e.g., radially) out from the rotor base, across a flowpath of the air circuit 140, to a distal tip of the respective turbine blade.

The air turbine rotor 146 may be operatively coupled to the EPD gear system 112 and the EPD clutch 114 through the EPD electric motor 108. The air turbine rotor 146 of FIG. 3, for example, is mechanically coupled to the EPD gear system 112 through the motor rotor 120. Here also, the EPD electric motor 108 and its motor rotor 120 are arranged axially between (a) the EPD gear system 112 and the EPD clutch 114 and (b) the EPD air turbine 110 and its air turbine rotor 146. By contrast, the motor rotor 120 is mechanically coupled to the EPD gear system 112 and the EPD clutch 114 independent of (e.g., not through) the EPD air turbine 110 and its air turbine rotor 146.

The EPD air turbine 110 is configured to convert fluid power received from the air source 142 into mechanical power. For example, during operation of the EPD air turbine 110, the pressurized air received from the air source 142 through the air circuit 140 may be expanded across the air turbine rotor 146. This expansion of the pressurized air may drive rotation of the air turbine rotor 146 about its turbine axis 148. The air turbine rotor 146, in turn, may provide mechanical power to and drive rotation of the high speed rotating structure 68, for example sequentially through the motor rotor 120, the EPD gear system 112, the EPD clutch 114 (when engaged), the first gearbox gear system 126 and the first GRS drivetrain 128. This mechanical power may be provided to boost power or completely power the rotation of the high speed rotating structure 68.

The EPD gear system 112 is configured to provide a speed reduction from the electro-pneumatic drive members 108 and 110 to an output element 150 of the electro-pneumatic drive 98. The EPD gear system 112 of FIG. 3, for example, is configured such that rotational speeds of the motor rotor 120 and the air turbine rotor 146 may be faster than a rotational speed of the electro-pneumatic drive (EPD) output element 150. Briefly, this EPD output element 150 may be an output shaft or any other coupling configured to mechanically couple the EPD clutch 114 to the first gearbox gear system 126.

The EPD gear system 112 may be configured as an epicyclic gear system such as a star gear system. The EPD gear system 112 of FIG. 3, for example, includes a gear system axis 152, a sun gear 154, a ring gear 156, a plurality of first intermediate gears 158, a plurality of second intermediate gears 160 and a carrier 162. The gear system axis 152 may be a rotational axis and/or a centerline axis of the EPD gear system 112 and its members 154 and 156. The sun gear 154 is rotatable about the gear system axis 152. The first intermediate gears 158 are arranged circumferentially about the sun gear 154 and the gear system axis 152 in an array. Each of these first intermediate gears 158 is meshed with the sun gear 154. Each of these first intermediate gears 158 is rotatably mounted to the carrier 162 such that each first intermediate gear 158 is rotatable about a respective intermediate gear axis, which intermediate gear axis may be parallel to the gear system axis 152. The second intermediate gears 160 are arranged circumferentially about the gear system axis 152 in an array. Each of these second intermediate gears 160 is rotatably mounted to the carrier 162. Moreover, each of the second intermediate gears 160 is rotatably coupled to a respective one of the first intermediate gears 158 and is thereby rotatable about the respective intermediate gear axis. Each second intermediate gear 160 of FIG. 3, for example, is connected to the respective first intermediate gear 158 through a respective inter-gear shaft 163. Each inter-gear shaft 163 of FIG. 3 is rotatably mounted to and supported by the carrier 162. The ring gear 156 circumscribes the array of the second intermediate gears 160, where each of the second intermediate gears 160 is meshed with the ring gear 156. The carrier 162 is stationary. The carrier 162 of FIG. 3, for example, may be fixedly connected to a stationary component (e.g., a support frame) of the EPD housing structure 116.

The sun gear 154 is operatively coupled to the EPD electric motor 108 and the EPD air turbine 110. The sun gear 154 of FIG. 3, for example, is mechanically coupled to the motor rotor 120, which motor rotor 120 mechanically couples the sun gear 154 to the air turbine rotor 146. The ring gear 156 is mechanically coupled to the EPD clutch 114. The EPD gear system 112 thereby operatively couples the EPD electric motor 108 and the EPD air turbine 110 to the EPD clutch 114.

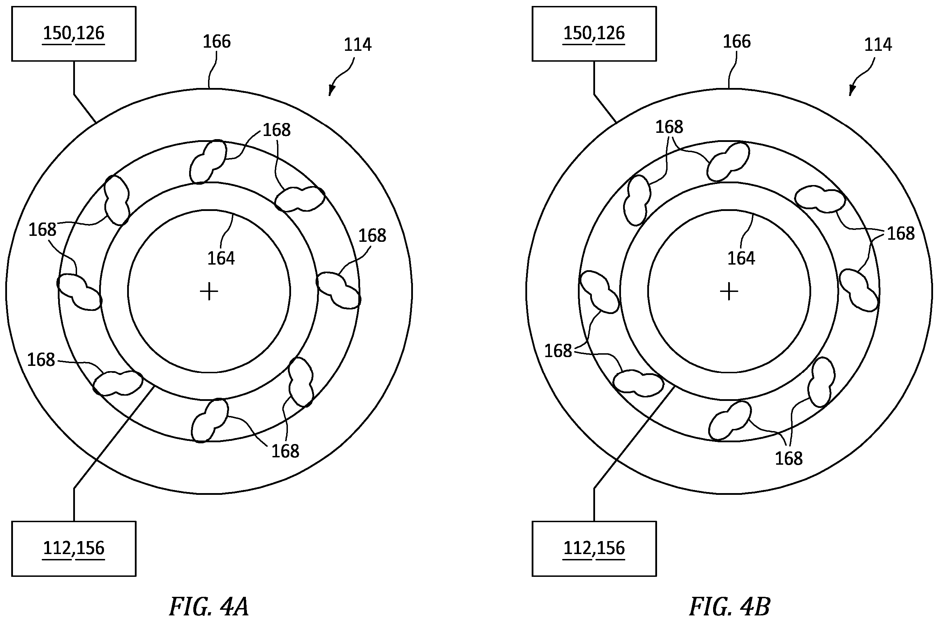

The EPD clutch 114 may be configured as a passively actuated clutch such as an overrunning clutch. The EPD clutch 114 of FIGS. 4A and 4B, for example, is configured as a sprag clutch. This EPD clutch 114 of FIGS. 4A and 4B includes an inner clutch member 164, an outer clutch member 166 and one or more clutch sprags 168. The outer clutch member 166 is disposed radially outboard of and radially spaced from the inner clutch member 164. The outer clutch member 166 extends circumferentially about (e.g., circumscribes) the inner clutch member 164 and an array of the clutch sprags 168. The clutch sprags 168 are arranged circumferentially about the inner clutch member 164 in the array. This array of the clutch sprags 168 is arranged within an annular gap formed by and radially between the inner clutch member 164 and the outer clutch member 166. Each of these clutch sprags 168 is movable (e.g., pivotable) between an engaged position (e.g., see FIG. 4A) and a disengaged position (e.g., see FIG. 4B). Each clutch sprag 168 may also be biased (e.g., spring biased) to move towards its engaged position of FIG. 4A.

The inner clutch member 164 is operably coupled to the EPD gear system 112. The inner clutch member 164 of FIGS. 4A and 4B, for example, is mechanically coupled to the ring gear 156 (see also FIG. 3). The outer clutch member 166 is operably coupled to the EPD output element 150 and, thus, the first gearbox gear system 126. The outer clutch member 166 of FIGS. 4A and 4B, for example, is mechanically coupled to the EPD output element 150.

In the engaged position of FIG. 4A, each clutch sprag 168 engages (e.g., contacts) a (e.g., cylindrical) outer surface of the inner clutch member 164 and a (e.g., cylindrical) inner surface of the outer clutch member 166. When the inner clutch member 164 rotates faster than the outer clutch member 166, the engagement between the outer surface of the inner clutch member 164 and each clutch sprag 168 may cause that clutch sprag to move (e.g., pivot counterclockwise in FIG. 4A) into and remain in the engaged position of FIG. 4A, where the clutch sprags 168 are jammed between the inner clutch member 164 and the outer clutch member 166. These jammed clutch sprags 168 rotationally couple / lock the inner clutch member 164 to the outer clutch member 166. The EPD clutch 114 may thereby transfer mechanical power from the EPD gear system 112 to the EPD output element 150.

In the disengaged position of FIG. 4B, each clutch sprag 168 may still engage (e.g., contact) the outer surface of the inner clutch member 164 and the inner surface of the outer clutch member 166; e.g., due to the spring bias. However, when the inner clutch member 164 rotates slower than the outer clutch member 166, the engagement between the inner surface of the outer clutch member 166 and each clutch sprag 168 may cause that clutch sprag 168 to move (e.g., pivot clockwise in FIG. 4B) into and remain in the disengaged position of FIG. 4B, where the clutch sprags 168 slide along (e.g., skip along) the outer surface of the inner clutch member 164 and the inner surface of the outer clutch member 166. The inner clutch member 164 is thereby rotationally disengaged from the outer clutch member 166. The EPD clutch 114 may therefore no longer transfer mechanical power from the EPD gear system 112 to the EPD output element 150. Moreover, since the clutch sprags 168 slide along the outer surface of the inner clutch member 164 and the inner surface of the outer clutch member 166, the EPD clutch 114 also does not transfer mechanical power (e.g., backwards) from the EPD output element 150 to the EPD gear system 112. With this arrangement, the EPD electric motor 108 and/or the EPD air turbine 110 may impart little or no rotational drag onto the high speed rotating structure 68 when those electro-pneumatic drive members 108 and/or 110 are non-operational; e.g., depowered, stationary, etc. Moreover, the EPD electric motor 108 and/or the EPD air turbine 110 may not be subject to potential overspeed when the high speed rotating structure 68 is rotating with the turbine engine 24 at, for example, a full (e.g., maximum) power setting.

Referring to FIG. 2, the electric machine 104 includes an electric machine rotor 170, an electric machine stator 172 and an electric machine housing 174; e.g., a case. The machine rotor 170 is rotatable about a rotational axis 176 of the machine rotor 170, which machine axis 176 may also be an axial centerline of the electric machine 104. The machine stator 172 is disposed next to and in electromagnetic communication with the machine rotor 170. The machine stator 172 of FIG. 2, in particular, is radially outboard of and circumscribes the machine rotor 170. With this arrangement, the electric machine 104 is configured as a radial flux electric machine. The electric machine 104 of the present invention, however, is not limited to such an exemplary rotor-stator configuration nor to radial flux arrangements. The machine rotor 170, for example, may alternatively be radially outboard of and circumscribe the machine stator 172. In another example, the machine rotor 170 may be axially next to the machine stator 172 configuring the electric machine 104 as an axial flux electric machine. Referring again to FIG. 2, the machine rotor 170 and the machine stator 172 are at least partially or completely housed within an interior of the machine housing 174.

The electric machine 104 of FIG. 2 is operatively coupled to the low speed rotating structure 72. The machine rotor 170 of FIG. 2, for example, is mechanically coupled to a second gearbox gear system 178 of the accessory gearbox 118. This second gearbox gear system 178 is mechanically coupled to the low speed rotating structure 72 through a second gearbox-to-rotating structure (GRS) drivetrain 180; schematically shown. This second GRS drivetrain 180 may be configured as or otherwise include a shaft, a tower shaft assembly, another gearbox (e.g., an angle gearbox), and/or the like.

The electric machine 104 of FIG. 2 may be configurable as an electric motor and/or an electric generator; e.g., an electric motor-generator. For example, during a motor mode of operation, the electric machine 104 may operate as the electric motor to convert electricity received from the aircraft electrical system 102 into mechanical power. The machine stator 172, for example, may generate an electromagnetic field with the machine rotor 170 using a current of electricity received from the aircraft electrical system 102 through the EM controller 106. This electromagnetic field may drive rotation of the machine rotor 170. The machine rotor 170, in turn, may provide mechanical power to and drive rotation of the low speed rotating structure 72 through the second gearbox gear system 178 and the second GRS drivetrain 180. This mechanical power may be provided to boost power or completely power the rotation of the low speed rotating structure 72. By contrast, during a generator mode of operation, the electric machine 104 may operate as the electric generator to convert mechanical power received from the low speed rotating structure 72 into electricity. Rotation of the machine rotor 170, for example, may be rotationally driven by rotation of the low speed rotating structure 72 through the second GRS drivetrain 180 and the second gearbox gear system 178. The rotation of the machine rotor 170 may generate an electromagnetic field with the machine stator 172, and the machine stator 172 may convert energy from the electromagnetic field into electricity. The electric machine 104 may then provide a current of electricity to the aircraft electrical system 102 through the EM controller 106 for storage and/or further use. The electric machine 104 of the present invention, however, is not limited to such exemplary operation. For example, the electric machine 104 may alternatively be configured as a dedicated electric generator; e.g., without the electric motor functionality. The electric machine 104 may alternatively be configured as a dedicated electric motor; e.g., without the electric generator functionality.

The EM controller 106 includes an electric machine (EM) controller housing 182 and internal electric machine (EM) controller circuitry 184. The EM controller housing 182 may be configured as an enclosed case (e.g., a closed or sealed container) for the EM controller circuitry 184. The EM controller circuitry 184 is disposed within an interior of the EM controller housing 182; e.g., an internal chamber or other volume(s) within and enclosed by the EM controller housing 182. The EM controller circuitry 184 includes various electrical components, connectors and the like. Examples of the electrical components include, but are not limited to, printed circuit board(s) (PCB(s)), electrical inductor(s), electrical inverter(s), electrical amplifier(s), electrical switch(es) (e.g., contactor(s), relay(s), etc.), a processing device, memory, a communication module, electrical transformer(s), electrical rectifier(s), and/or the like.

The EM controller 106 is electrically coupled to the electric machine 104 through one or more electrical couplings 186. The EM controller circuitry 184 of FIG. 2, for example, is electrically coupled to the electric machine 104 and its machine stator 172 through the electric couplings 186. Similarly, the EM controller 106 is electrically coupled to the aircraft electrical system 102 and its electrical distribution bus 136 through, for example, one or more electric couplings 188. The EM controller circuitry 184 of FIG. 2, for example, is electrically coupled to the aircraft electrical system 102 and its electrical distribution bus 136 through the electric couplings 188. Examples of the electrical couplings 186, 188 include, but are not limited to, high voltage electric cables, power feeder cables, power buses, and/or the like.

The EM controller 106 and its EM controller circuitry 184 are configured to control operation of the electric machine 104; e.g., for bidirectionally controlling operation of the electric machine 104 as the electric motor or the electric generator. For example, when operating as the electric motor, the EM controller 106 and its EM controller circuitry 184 are configured to regulate a flow of electricity from the aircraft electrical system 102 to the electric machine 104. This electricity flow regulation may include: (a) turning-on the flow of electricity from the aircraft electrical system 102 to the electric machine 104 (e.g., electrically coupling the electric machine 104 to the aircraft electrical system 102); (b) turning-off the flow of electricity from the aircraft electrical system 102 to the electric machine 104 (e.g., electrically decoupling the electric machine 104 from the aircraft electrical system 102); (c) moderating the flow of electricity from the aircraft electrical system 102 to the electric machine 104. Here, the EM controller 106 operates as a motor controller. In another example, when operating as the electric generator, the EM controller 106 and its EM controller circuitry 184 are configured to regulate a flow of electricity from the electric machine 104 to the aircraft electrical system 102. This electricity flow regulation may include: (a) turning-on the flow of electricity from the electric machine 104 to the aircraft electrical system 102 (e.g., electrically coupling the electric machine 104 to the aircraft electrical system 102); (b) turning-off the flow of electricity from the electric machine 104 to the aircraft electrical system 102 (e.g., electrically decoupling the electric machine 104 from the aircraft electrical system 102); (c) moderating the flow of electricity from the electric machine 104 to the aircraft electrical system 102. Here, the EM controller 106 operates as a generator controller.

The aircraft electrical system 102 may be dedicated to and/or contained within the aircraft propulsion system 22. Alternatively, the aircraft electrical system 102 may also be arranged outside of the aircraft propulsion system 22 and/or service one or more other aircraft components and/or systems; e.g., component(s) and/or system(s) arranged with an airframe of the aircraft, component(s) and/or system(s) arranged with a companion propulsion system, and/or the like. The aircraft electrical system 102 of FIG. 2 includes the electrical distribution bus 136. This aircraft electrical system 102 may also include a power source 190 and/or a power storage 192.

The electrical distribution bus 136 is electrically coupled to the EPD electric motor 108 through the EPD controller 100. The electrical distribution bus 136 is electrically coupled to the electric machine 104 through the EM controller 106. The electrical distribution bus 136 is also electrically coupled to the power source 190 and the power storage 192 through one or more respective electrical couplings 194 and 196; e.g., high voltage electric cables, power feeder cables, power buses, and/or the like. With this arrangement, the electrical distribution bus 136 provides an intermediate connection between the various electrical members 108 (via 100), 104 (via 106), 190 and/or 192. Moreover, it is contemplated the electrical distribution bus 136 may (or may not) also be electrically coupled to and provide the intermediate connection with one or more additional electric components of the aircraft propulsion system 22 and/or one or more additional electric components of the aircraft outside of the aircraft propulsion system 22. Examples of the additional electric components of the aircraft propulsion system 22 include, but are not limited to, sensors, actuators, pumps, valves, an electronic engine controller for the turbine engine 24, and/or the like. Examples of the additional electric components of the aircraft outside of the aircraft propulsion system 22 include, but are not limited to, electric devices mounted with an airframe of the aircraft.

The power source 190 is configured to generate electricity and provide that electricity to the electrical distribution bus 136. The power source 190, for example, may be configured as an electric generator powered by the turbine engine 24 (see FIG. 1). In another example, the power source 190 may be configured as an electric generator powered by another aircraft powerplant; e.g., an engine of a companion propulsion system, an engine of an auxiliary power unit (APU), a fuel cell system, and/or the like.

The power storage 192 is configured to receive electricity from the electrical distribution bus 136 and store that received electricity as potential energy. The power storage 192 is also configured to release the stored potential energy as electricity output into the electrical distribution bus 136. The power storage 192, for example, may be configured as or otherwise include a battery or an array of batteries (e.g., a battery pack). In another example, the power storage 192 may be configured as or otherwise include one or more capacitors; e.g., supercapacitors. Of course, it is also contemplated power may also or alternatively be kinetically stored through, for example, a flywheel.

The engine accessory system 96 of FIG. 2 may be operated in one or more modes of operation. Examples of these operating modes include, but are not limited to: (1) an electro-pneumatic drive mode; (2) a pneumatic drive mode; (3) an electric drive mode; (4) a power share mode; and (5) a standby mode.

In the electro-pneumatic drive mode, both the EPD electric motor 108 and the EPD air turbine 110 may be operated to mechanically power (e.g., fully or boost mechanical power to) the high speed rotating structure 68. For example, the EPD electric motor 108 may receive electricity from the power source 190 and/or the power storage 192 and convert that electricity into mechanical power as described above. The EPD air turbine 110 may receive pressurized air from the air source 142 and expand that pressurized air across the air turbine rotor 146 to provide additional mechanical power. This mechanical power may be utilized to rapidly drive rotation of the high speed rotating structure 68, for example, to facilitate startup of the turbine engine 24. Here, the EPD electric motor 108 may be utilized to boost the mechanical power provided by the EPD air turbine 110. The EPD air turbine 110 may thereby be sized to facilitate a degraded start capability for dispatch (e.g., turbine engine startup taking longer than sixty seconds (>60s)), while the EPD air turbine 110 and the EPD electric motor 108 may collectively facilitate a rapid start capability (e.g., turbine engine startup taking equal to or less than sixty seconds (≤60s)). In some embodiments, the EPD electric motor 108 and the EPD air turbine 110 may be concurrently powered up. In other embodiments, the EPD electric motor 108 may be initially powered up to perform initial movement of gas through the core flowpath 48 (see FIG. 1), then the EPD air turbine may be powered up to facilitate the turbine engine startup. In still other embodiments, the EPD air turbine 110 may be initially powered up and then the EPD electric motor 108 may be powered up.

In the pneumatic drive mode, the EPD electric motor 108 may be non-operational (e.g., de-powered) while the EPD air turbine 110 may be operated to mechanically power the high speed rotating structure 68. This pneumatic drive mode may be performed, for example, in an unlikely event the EPD electric motor 108 cannot be utilized for turbine engine startup. The pneumatic drive mode may thereby provide a backup turbine engine startup mode to the electro-pneumatic drive mode.

In the electric drive mode, the EPD air turbine 110 may be non-operational while the EPD electric motor 108 may be operated to mechanically power the high speed rotating structure 68. This electric drive mode may be performed, for example, in an unlikely event the EPD air turbine 110 cannot be utilized for turbine engine startup. The pneumatic drive mode may thereby provide another backup turbine engine startup mode to the electro-pneumatic drive mode. The electric drive mode may also or alternatively be utilized to facilitate core turning when the turbine engine 24 is shutdown. The EPD electric motor 108, for example, may be operated for a period of time following turbine engine shutdown to continue to flow air through the core flowpath 48 as the turbine engine 24 cools. The electric drive mode may still also or alternatively be utilized to boost the mechanical power input to the high speed rotating structure 68 during turbine engine operation; e.g., during a rapid high thrust maneuver.

In the power share mode and during operation of the turbine engine 24, the electric machine 104 may be operated as an electric generator to generate electricity. At least some or all of this electricity may be routed through the aircraft electrical system 102 to the EPD electric motor 108 to boost mechanical power input to the high speed rotating structure 68. During this mode, power is extracted from the low speed rotating structure 72 and injected into (shared with) the high speed rotating structure 68. Here, the EPD air turbine 110 may be non-operational.

In the standby mode, both the EPD electric motor 108 and the EPD air turbine 110 may be non-operational.

Some of the foregoing operating modes are described above as facilitating turbine engine startup. It is contemplated this turbine engine startup may occur while the aircraft is on ground. It is also contemplated the turbine engine startup may occur while the aircraft is in flight; e.g., restarting the turbine engine 24 following a shutdown or flameout event. During restart, use of the EPD electric motor 108 may facilitate reengagement at higher speeds through gradual torque application.

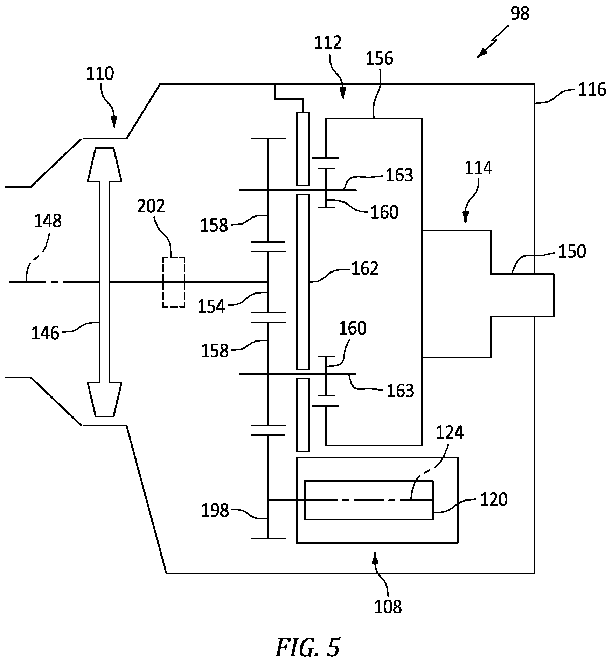

The EPD gear system 112 of FIG. 3 is described above with the motor rotor 120 operably coupled between the sun gear 154 and the air turbine rotor 146. The EPD gear system 112 of the present invention, however, is not limited to such an exemplary arrangement. For example, referring to FIG. 5, the air turbine rotor 146 may alternatively be operably coupled to the sun gear 154, and the motor rotor 120 may be operably coupled to a drive gear 198 of the EPD gear system 112. The drive gear 198 of FIG. 5 is disposed to a side of the array of the first intermediate gears 158 and is meshed with a respective one of the first intermediate gears 158. The EPD electric motor 108 is thereby operably coupled to the EPD gear system 112 independent of the EPD air turbine 110. The EPD air turbine 110 is also operably coupled to the EPD gear system 112 independent of the EPD electric motor 108.

In some embodiments, referring to FIG. 3, the EPD gear system 112 may be configured such that the motor rotor 120, the air turbine rotor 146, the EPD gear system 112 and the EPD clutch 114 are coaxial with one another. In other embodiments, referring to FIG. 5, the air turbine rotor 146 may be coaxial with the EPD clutch 114 while the motor axis 124 is (e.g., laterally) offset from the turbine axis 148. In some embodiments, referring to FIG. 3, the EPD electric motor 108 may be arranged axially between the EPD air turbine 110 and the EPD clutch 114. In FIG. 3, the EPD electric motor 108 is also arranged axially between the EPD air turbine 110 and the EPD gear system 112. In other embodiments, referring to FIG. 5, the EPD electric motor 108 may be disposed to a side of one or more of the other electro-pneumatic drive members 110, 112, and/or 114.

In some embodiments, referring to FIGS. 3 and 5, the electro-pneumatic drive 98 may (or may not) also include a second clutch 202 operatively coupled between (a) the EPD air turbine 110 and its air turbine rotor 146 and (b) one or more of the other electro-pneumatic drive members 108, 112 and/or 114. This clutch 202 may be configured as a passively actuated clutch such as an overrunning clutch. With such an arrangement, the EPD electric motor 108 may be operated with little or no rotational drag from the EPD air turbine 110 when that EPD air turbine 110 is non-operational.

While various embodiments of the present invention have been described, it will be apparent to those of ordinary skill in the art that many more embodiments and implementations are possible within the scope of the invention. For example, the present invention as described herein includes several aspects and embodiments that include particular features. Although these features may be described individually, it is within the scope of the present invention that some or all of these features may be combined with any one of the aspects and remain within the scope of the invention. Accordingly, the present invention is not to be restricted except in light of the attached claims and their equivalents.

## Claims

1. An apparatus for an aircraft powerplant (20), the apparatus comprising:
an electro-pneumatic drive (98) including a housing structure (116), an air turbine (110), an electric motor (108), a clutch (114) and an output element (150);
the air turbine (110) comprising an air turbine rotor (146) housed in the housing structure (116), the air turbine rotor (146) operatively coupled to the output element (150) through the clutch (114), and the air turbine (110) configured to drive rotation of the output element (150) about an axis (148);
the electric motor (108) comprising an electric motor rotor (120) housed in the housing structure (116), the electric motor rotor (120) operatively coupled to the output element (150) through the clutch (114) independent of the air turbine (110), and the electric motor (108) configured to drive rotation of the output element (150) about the axis (148); and
the clutch (114) housed in the housing structure (116).

2. The apparatus of claim 1, wherein the clutch (114) comprises an overrunning clutch (114).

3. The apparatus of claim 1 or 2, wherein the air turbine rotor (146) is operatively coupled to the clutch (114) through the electric motor (108).

4. The apparatus of any preceding claim, wherein the air turbine rotor (146) is operatively coupled to the output element (150) independent of the electric motor (108).

5. The apparatus of any preceding claim, wherein:
the air turbine rotor (146) is configured to rotate about the axis (148); and/or
the electric motor rotor (120) is configured to rotate about the axis (148).

6. The apparatus of any preceding claim, wherein the axis (148) is a first axis (148), and the electric motor rotor (120) is configured to rotate about a second axis (124) that is offset from the first axis (148).

7. The apparatus of any preceding claim, wherein the electro-pneumatic drive (98) further includes a gear system (112) operatively coupling:
the electric motor rotor (120) to the clutch (114); and/or
the air turbine rotor (146) to the clutch (114).

8. The apparatus of any preceding claim, wherein:
the electro-pneumatic drive (98) further includes a gear system (112);
the air turbine rotor (146) is operatively coupled to the clutch (114) through the gear system (112) independent of the electric motor (108); and
the electric motor rotor (120) is operatively coupled to the clutch (114) through the gear system (112) independent of the air turbine (110).

9. The apparatus of any preceding claim, wherein the clutch (114) is a first clutch (114), and the electro-pneumatic drive (98) further includes a second clutch (202) operatively coupling the air turbine rotor (146) to the electric motor (108), and wherein, optionally, the second clutch (202) comprises an overrunning clutch (114).

10. The apparatus of any preceding claim, further comprising:
an accessory gearbox (118) comprising a gear system (112);
the housing structure (116) mounted to the accessory gearbox (118); and
the output element (150) operatively coupled to the gear system (112).

11. The apparatus of any preceding claim, further comprising:
a compressor section (41);
a combustor section (42);
a turbine section (43);
a flowpath (48) extending through the compressor section (41), the combustor section (42) and the turbine section (43); and
a first rotating structure (68) comprising a first compressor rotor (62) in the compressor section (41) and a first turbine rotor (63) in the turbine section (43), the first rotating structure (68) operatively coupled to the output element (150).

12. The apparatus of claim 11, further comprising:
a second rotating structure (72) comprising a second compressor rotor (61) in the compressor section (41) and a second turbine rotor (64) in the turbine section (43);
an electric machine (104) configurable as at least one of a second electric motor or an electric generator, the electric machine (104) comprising an electric machine rotor (170) that is operatively coupled to the second rotating structure (72); and
an electrical system (136) electrically coupling the electric motor (108) and the electric machine (104).

13. An apparatus for an aircraft powerplant (20), the apparatus comprising:
a turbine engine (24) including a compressor section (41), a combustor section (42), a turbine section (43), a flowpath (48) and an engine rotating structure (68), the flowpath (48) extending through the compressor section (41), the combustor section (42) and the turbine section (43), and the engine rotating structure (68) including a compressor rotor (62) in the compressor section (41) and a turbine rotor (63) in the turbine section (43); and
an accessory system (96) for the turbine engine (24), the accessory system (96) including an air turbine (110), an electric motor (108), a clutch (114) and an output element (150);
the air turbine (110) comprising an air turbine rotor (146) that is operatively coupled to the output element (150) through the clutch (114), and the air turbine (110) configured to drive rotation of the output element (150);
the electric motor (108) comprising an electric motor rotor (120) that is operatively coupled to the output element (150) through the clutch (114) and independent of the air turbine (110), and the electric motor (108) configured to drive rotation of the output element (150); and
the output element (150) operatively coupled to the engine rotating structure (68),
wherein, optionally, the air turbine rotor (146) is coaxial with the electric motor rotor (120).

14. The apparatus of claim 13, wherein the accessory system (96) further includes:
an electro-pneumatic drive (98) configured as a line replaceable unit, the electro-pneumatic drive (98) including the air turbine (110), the electric motor (108) and the clutch (114); and/or
an epicyclic gear system (112) operatively coupled between (a) the air turbine rotor (146) and the electric motor rotor (120) and (b) the engine rotating structure (68).

15. An apparatus for an aircraft powerplant (20), the apparatus comprising:
an electro-pneumatic drive (98) including a housing structure (116), an air turbine (110), an electric motor (108), an epicyclic gear system (112) and an output element (150);
the air turbine (110) comprising an air turbine rotor (146) housed in the housing structure (116), the air turbine rotor (146) operatively coupled to the output element (150) through the epicyclic gear system (112), and the air turbine (110) configured to drive rotation of the output element (150) about an axis (148);
the electric motor (108) comprising an electric motor rotor (120) housed in the housing structure (116), the electric motor rotor (120) operatively coupled to the output element (150) through the epicyclic gear system (112) independent of the air turbine (110), and the electric motor (108) configured to drive rotation of the output element (150) about the axis (148); and
the epicyclic gear system (112) housed in the housing structure (116).
